# EUROPEAN PATENT SPECIFICATION

(11) **EP 3 512 659 B1**
(45) Date of publication and mention of the grant of the patent: **19.11.2025**
(21) Application number: 17768041.0
(22) Date of filing: 05.09.2017
(51) Int. Cl.: B23K 9/095, B08B 7/00, B23K 9/20, B23K 9/235, B23K 11/00, B23K 11/34, B23K 11/36

(54) **METHOD AND APPARATUS FOR CLEANING AND JOINING A JOINING ELEMENT ONTO A WORKPIECE**
VERFAHREN UND VORRICHTUNG ZUR REINIGUNG UND VERBINDUNG EINES VERBINDUNGSELEMENTS AUF EIN WERKSTÜCK
PROCÉDÉ ET APPAREIL DE NETTOYAGE ET DE SOUDAGE D'UN ÉLÉMENT DE RACCORDEMENT SUR UNE PIÈCE À USINER

(30) Priority: 13.09.2016 DE 102016117177
(43) Date of publication of application: 24.07.2019
(73) Proprietor: Newfrey LLC, New Britain, CT 06053 (US)
(72) Inventor: EISSARA, Bah, 35394 Gießen (DE); MESCHUT, Gerson, 33098 Paderborn (DE); REIS, Christian, 35394 Giessen (DE)
(74) Representative: SBD IPAdmin
(86) International application number: PCT/EP2017/072253
(87) International publication number: WO 2018/050494

(56) References cited:
- US-A- 5 662 820
- US-A1- 2006 131 280
- US-A1- 2009 014 422
- US-A1- 2009 057 373
- US-B2- 6 815 631

## Description

The present invention relates to a method for joining a joining element onto a workpiece, in particular for stud welding.

The present invention further relates to a joining apparatus for joining a joining element onto a workpiece, in particular for implementing the above-stated method, wherein the joining apparatus has a joining head, which comprises a holding device for a joining element and by means of which the joining element is movable along a joining axis in relation to a workpiece.

A joining method of this type and an associated joining apparatus are widely known, for instance in the field of so-called stud welding.

In this, studs are joined onto workpieces such as metal plates in such a way that the studs protrude perpendicularly in relation to a surface of the workpiece. Components which have been joined in this way can be used, for instance, to fasten plastics clips to the stud. The clips can serve, for instance, to fix pipes or cables in relation to the workpiece, such as, for instance, fuel or brake lines. The joining method of the generic type is therefore used in particular in the field of body making for motor vehicles.

In stud welding, an electrical current flow is established between the joining element and the workpiece, wherein the joining element is raised in relation to the workpiece, so that an arc is drawn therebetween. The arc leads to a fusion (or melting) of the opposing surfaces of workpiece and joining element. After this, the joining element is lowered onto the workpiece, so that the electrical joining current is short-circuited. The total melt rigidifies and the joining process is concluded.

For the quality of joining connections of this type, it is not only the actual joining process which is responsible. A not unimportant role is here also played by the material properties and surface quality of the workpiece, possibly also of the joining element. This applies when the workpiece and the joining element are made of a steel. In particular, these problems are present when the workpiece and the joining element are respectively made of an aluminium alloy.

In joining connections based on aluminium alloys, changes in characteristic properties of the workpiece are particularly noticeable. Such properties can include whether the aluminium alloy is constituted by a recycled material. In addition, problems can arise in terms of uneven grain sizes on the upper layer, which layer can reach to a depth of up to 1 mm, to be precise in particular in the case of extrusion moulding material.

Such uneven grain sizes can lead to divergent conductivities. This can hence influence the current flow through the arc.

In addition, many workpieces are produced in a casting process. This produces the problem that the surface is coated with release agents, which can be constituted by waxes, oils, polysiloxanes, hydrocarbons, polymers, etc. In particular when the coating with such release agents is uneven across the area, it is difficult to suitably adapt joining parameters. In the case of a coating with carbon, this can lead to pores or shrink holes in the welded joint, thus all in all to a higher porosity of the welded joint, which can adversely affect the strength of the welded joint.

Moreover, alloy elements can have influence on the weldability.

Generally speaking, although materials having defined surface specifications are requested, practice shows that these surface specifications, to which a joining process is then specifically tailored in terms of the joining parameters, are not always properly observed.

In the field of stud welding, it is known to perform, prior to the actual stud welding process, an arc cleaning process ("clean flash"). US2006131280 and US6815631 disclose such arc cleaning processes. In this, prior to the actual welding process, an arc with alternating polarity is set up, on the basis of which impurities are ionized and are stripped from the workpiece surface. A problem with this process is that such impurities can subsequently on the other joining surface attach themselves to the stud, so that, in this case too, problems can arise in terms of consistent joining connections.

Against this background, an object of the invention is to define an improved method for joining a joining element onto a workpiece and an improved joining apparatus for this purpose.

The above object is achieved, on the one hand, by a method for joining a joining element onto a workpiece according to claim 1 and a joining apparatus according to claim 10.

In the method according to the invention, it is firstly possible, through the detection of at least one characteristic variable of the workpiece and/or of the joining element, to classify the workpiece or its surface. In this context, it is self-evident that preferably at least one characteristic variable of a surface portion of the workpiece, onto which portion the joining element is to be joined, is detected.

Moreover, in the method according to the invention, it is possible to classify the workpiece (and classify several areas of the workpiece), then to perform a cleaning (if needed) and when the entire workpiece, or at least a portion of the workpiece is cleaned, perform one or several joining steps.

The characteristic variable can here relate to the material, a surface quality, a surface finishing, a carbon coating on the surface, a purity, can relate to release agents in the case of a cast workpiece, yet can also comprise relative quantities such as, for instance, the workpiece material in relation to the joining element material.

Below the focus is set on a preferred variant in which solely at least one characteristic variable of the workpiece is detected. All following references to the detection and evaluation of a variable of a workpiece should, however, equally relate to the detection or evaluation of a variable of the joining element, unless otherwise explicitly stated.

The detection of this at least one characteristic variable is realized preferably by automated means, to be precise preferably by means of a suitable detection device. This or these detection device(s) can comprise suitable sensors, which either operate purely passively or else actively subject the workpiece to a physical process, after which the reaction thereto is detected by the sensors.

The detection step enables the workpiece to be classified in a subsequent evaluation step. In this, a distinction is made between a first and a second variable class. The detection step can include that a or a plurality of characteristic variable(s) of the workpiece is/are combined into one variable quantity. Subsequently, it can then be established, for instance, whether this variable quantity falls into a first value range or into a second value range, which can then be equated to an evaluation and classification of the at least one characteristic variable into a first or a second variable class.

Insofar as a classification is made into the first variable class, this is intended to essentially mean that the workpiece or its surface is suitable for joining without the need to previously perform a cleaning process. If, for instance, a joining element is to be joined onto a relatively little polluted surface portion of a workpiece, a classification can be made into the first variable class, so that the joining process is subsequently performed without prior cleaning process. The classification in the first variable class can here mean that a subsequent joining process is performed either with standard joining parameters, or else with modified joining parameters, which will be examined in further detail below.

Insofar as the at least one characteristic variable is classified in the evaluation step in the second variable class, this means that a joining process is not performed without previously performing a cleaning process. Hence, in this case the cleaning process is firstly performed on the workpiece and/or on the joining element, and only after this is the joining process performed.

The cleaning process is here not an arc cleaning process, but is a cleaning process which is performed independently of the joining process.

The cleaning process is preferably performed in a stage in which a joining element is already located in a holding device of a joining head and is assigned to a specific location (joining site) on the workpiece. This is advantageous, in particular, when a cleaning device for performing the cleaning process is disposed on the joining head.

Alternatively, it is possible to respectively evaluate in advance, on a workpiece to which, for instance, a plurality of joining elements are to be fixed, the appropriate joining locations, in order to, where necessary, respectively perform cleaning processes successively at these locations, possibly even before a joining element is fed into a holding device of a joining head. The cleaning processes can hence be conducted, for instance, collectively on a workpiece, so as subsequently to fasten all the joining elements to the workpiece, in which case, between the joining processes, preferably no further cleaning process is any longer necessary.

According to a preferred embodiment, the cleaning process is performed using a cleaning medium.

The cleaning medium can be a gas, a liquid or a solid. Preferably, the application of the cleaning medium to the workpiece is realized by means of a separate cleaning device, which directs the cleaning medium onto a joining surface, in particular onto a joining site on the workpiece. The cleaning medium is here not an electrical cleaning medium and, in particular, is not an electric arc.

A cleaning device which is used to apply the cleaning medium is preferably separate from and independent of the systems for performing the joining process.

According to a particularly preferred embodiment, the cleaning medium comprises a gas, such as, for instance, a plasma gas, in particular a TIG plasma gas.

According to a further preferred embodiment, the cleaning medium has an ice jet, for instance a CO2 snow jet.

Furthermore, it is all in all advantageous if each individual joining process is performed with standard joining parameters or with joining parameters which have been modified in relation to the standard joining parameters, and wherein the joining process performed after the cleaning process is performed using the standard joining parameters.

The standard joining parameters of the joining process are parameters of the kind in which it is assumed that the surface of the workpiece is located in an optimal region. Hence, joining can be realized with the standard joining parameters.

Joining parameters can be, for instance, the welding current, the height of the joining element above the workpiece during the performance of the joining process (length of the arc), the period for which the arc is maintained, etc.

According to the present disclosure, each individual joining process is performed with standard joining parameters or with joining parameters which have been modified in relation to the standard joining parameters, wherein the method has the following steps: provision of a joining element and a workpiece onto which the joining element is to be joined, detection of at least one characteristic variable of the workpiece and/or of the joining element, evaluation of the at least one characteristic variable; and performance of the joining process using standard joining parameters if the at least one characteristic variable lies within a first value range, or performance of the joining process using modified joining parameters if the at least one characteristic variable lies within a second value range.

In this embodiment, the at least one characteristic variable is classified into a first value range or into a second value range. The two value ranges lie preferably within the first variable class. In other words, the evaluation of the at least one characteristic variable and the classification into the first value range or into the second value range is realized once it has been established that a joining process can be generally performed without the need to perform a prior cleaning process.

In other words, preferably after having established the general suitability of the workpiece for a joining process without previous cleaning process, it is established by evaluation of the at least one characteristic variable whether the joining process is performed using the standard joining parameters or using modified joining parameters.

The modified joining parameters are preferably adapted in dependence on the at least one characteristic variable, are thus modified as a function of the at least one characteristic variable.

If hence the at least one characteristic variable lies within the second value range, when it lies at that end of the second value range which lies remote from the first value range, then another set of modified joining parameters can, for instance, be used where the at least one characteristic variable within the second value range lies closer to the first value range.

Overall, it is further advantageous if the cleaning process is performed for a time period ranging from 0.1 seconds to 5 seconds.

Preferably, the duration of the cleaning process is less than 2 seconds. The cleaning process can here be performed continuously for this time period, or can be pulsed during this time period, for instance with 2 to 20 pulses within the time period.

Preferably, the time period of the cleaning process is less than/equal to a time period of a joining process, so that no prolonged cycle times are produced by the method according to the invention.

According to a further embodiment, after the cleaning process the at least one characteristic variable is detected once again, and subsequently an evaluation of the at least one characteristic variable is performed once again before the joining process is performed.

This makes it possible to perform, where necessary, several cleaning processes one after another if the characteristic variable, after performance of the cleaning process, were still not to lie within the first variable class. In addition, it is possible, where necessary, to establish whether the subsequent joining process is performed with standard joining parameters or with modified joining parameters, although it is advantageous if, after a cleaning process, joining is realized generally with standard joining parameters.

Finally it is also advantageous if, after the joining process, a supplementary cleaning process is performed.

The supplementary cleaning process can in particular serve to remove smoke residue arising during the joining process in order thereby to be able to provide a clean component comprising a workpiece and a joining element joined thereto.

Moreover it is advantageous if the joining process is performed using standard joining parameters or using modified joining parameters, wherein the joining parameters include whether the joining process comprises a preceding arc cleaning process.

In other words, after the cleaning process using a separate cleaning device, an arc cleaning process ("clean flash") can, where necessary, be performed, for instance, when the at least one characteristic variable is classified into the second value range.

In the joining apparatus according to the invention, it is preferred if the cleaning device is fixed to the joining head, in which case it is preferred if the cleaning device is oriented at an angle ranging between 10° and 45° in relation to the joining axis.

This makes it possible to clean a surface region of the workpiece, which surface region is located beneath a joining element, if the joining head has already received a joining element and is holding it in a holding device, thus shortly before the performance of an actual joining process.

According to a further embodiment, the detection device is fixed to the joining head.

This can be advantageous, in particular when the detection device is a passive detection device. Generally, the detection device can also, however, once fixed to the joining head, impart to the workpiece a physical quantity which is then measured, thus even when the detection device comprises an active component.

The teachings of the present disclosure may find application to other joining processes which are to be performed on workpieces, for instance even when two workpieces are to be joined together, for instance via a weld seam.

In this case too it is possible to detect in advance a characteristic variable of the workpiece and/or of the other workpiece and to classify these into a first and a second class, and then subsequently either to perform the joining process immediately, if the at least one characteristic variable falls into the first variable class, or to perform in advance a cleaning process which is independent of an arc or some other joining quantity.

The methods according to the present disclosure can hence also focus on providing a first and a second workpiece, which are to be connected to each other, and subsequently detecting at least one characteristic variable of one of the workpieces, preferably of both workpieces, and subsequently evaluating these.

Illustrative embodiments of the invention are represented in the drawing and are explained in greater detail in the following description, wherein:
Fig. 1 shows a schematic representation of an embodiment of a joining apparatus according to the invention;
Fig. 2 shows a time lapse diagram of an exemplary joining method according to the invention; and
Fig. 3 shows a flow chart of an exemplary method according to the invention.

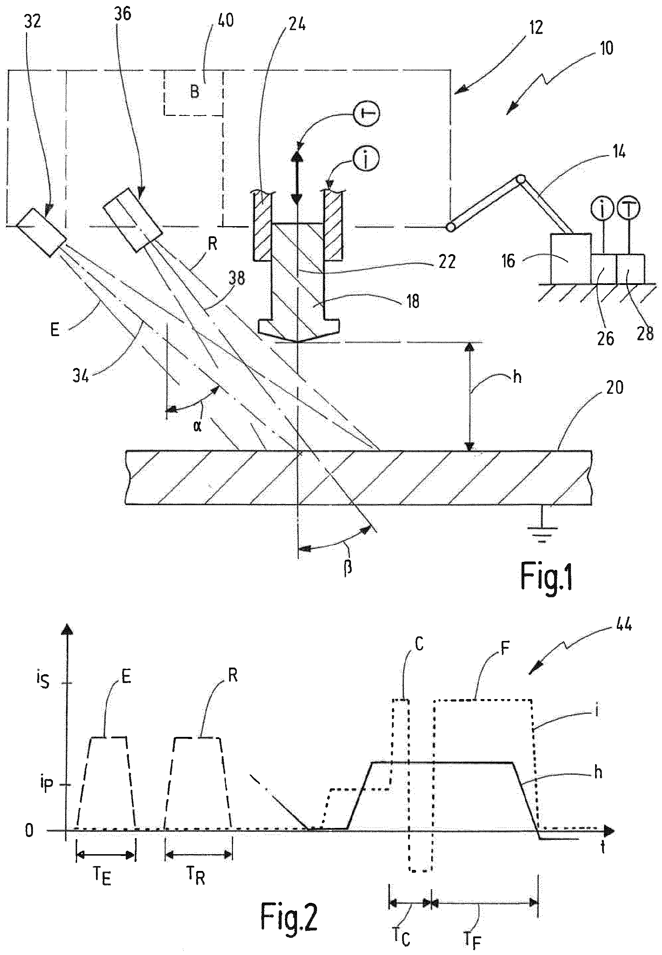

In Fig. 1 a joining apparatus is represented in schematic form and is denoted in general terms by 10.

The joining apparatus 10 comprises a joining head 12 or a joining gun, wherein the joining head 12 is preferably fixed to an arm 14 of a robot 16 and is hence movable in three dimensions in space.

The joining apparatus serves to join joining elements 18 onto workpieces 20. The joining elements can, in particular, be studs. The workpieces 20 can, in particular, be metal plates. The joining apparatus 10 is preferably used in the field of body making of motor vehicles.

The material of the workpiece 20 and of the joining element 18 is respectively preferably aluminium or an aluminium alloy.

For the performance of a joining process, the joining element 18 is held in a holding device 24 of the joining head 12 and oriented in a joining axis 22, which is preferably perpendicular to a surface of the workpiece 20.

The holding device 24 is preferably connected to a power source 26 and is configured to pass a joining current i into the joining element 18. The workpiece 20 is connected, for instance, to an earth (or a ground source), as is indicated in Fig. 1.

In Fig. 1 is further indicated that the joining apparatus 10 can have a feeding device 28, by means of which joining elements (indicated by a T in Fig. 1) can be driven by automated means to the holding device 24.

In order to obtain consistent joining results, the joining apparatus 10 comprises a detection device 32, which is configured to detect at least one characteristic variable of the workpiece 20, such as, for instance, a surface quality, a surface character, etc. Quality surface and surface character mean any property of the structure, not only a surface contamination. Material structures like grain size, surface quality or roughness may be taken into consideration. The detection device 32 can be provided separate from the joining head 12, but can also be fixed to the joining head 12, as indicated in Fig. 1. In this case, it is preferred if the detection device 32 is oriented along a detection axis 34 which assumes an angle α in relation to the joining axis 22. This angle α can range, for instance, from 10° to 45°.

The joining apparatus 10 further comprises a cleaning device 36. The cleaning device 36 is designed to apply a cleaning medium R to the surface of the workpiece 20. The cleaning device 36 can be configured separate from the joining head 12. For instance, the cleaning device 36 is, however, fixed to the joining head 12, as is indicated schematically in Fig. 1. In this case, it is preferred if the cleaning device 36 is oriented along a cleaning axis 38 which is oriented at an angle β in relation to the joining axis 22. The value of the angle β can, for instance, likewise range from 10° to 45°.

The joining apparatus 10 further comprises an evaluation device 40, which is designed to evaluate a characteristic variable, detected by the detection device 32, of the workpiece 20. The evaluation device 40 can be arranged separate from the joining head 12, yet can also be integrated in the latter or in the power source 26.

In Fig. 2 is represented in schematic form a time lapse diagram 44, which shows a detection process E, a cleaning process R, an arc cleaning process C and a joining process F.

In the implementation of the method according to the invention, firstly, in a time period TE, at least one characteristic variable of the workpiece is detected, as is indicated at E in Fig. 2.

After this, the at least one characteristic variable is evaluated, which is not represented in Fig. 2. If the at least one characteristic variable is classified into a first variable class, directly following this a joining process F can be performed, optionally with the intervening performance of an arc cleaning process C.

For the representation of a joining process F, Fig. 2 shows the height h of the joining element 18 in relation to the surface of the workpiece 20 during the performance of the joining process, as well as the quantity of a current i which is passed into the holding device and hence into the joining element 18.

The joining process F begins after the joining element 18 has been lowered onto the surface of the workpiece 20 (h = 0). After this, the current i is switched on and a pilot arc is drawn (i = iP). The joining element 18 is subsequently raised from the workpiece 20. Following this, the current i can be increased from iP to a welding current iS in order to fuse the reciprocal joining surfaces. After this, the workpiece is lowered again, to be precise preferably to below the surface of the workpiece 20, so that a short circuit is formed and the current i is lowered to 0. With this, the joining process F is concluded.

An optionally previously performed arc cleaning process C includes producing, at least once, an arc having an inverse polarity, by means of which ionized component parts on the surface of the workpiece 20 make their way in the direction towards the joining element 18.

After the detection process E and the subsequent evaluation, it is established whether the at least one characteristic variable falls into a first or a second variable class. In the event of classification in a first variable class, a subsequent cleaning process R, which is represented in Fig. 2, can be omitted, as mentioned, and it is possible to proceed directly to the joining process F, which takes place at a time TF, where necessary with a preceding arc cleaning at a space in time TC.

Insofar as the at least one characteristic variable falls into the second variable class, the cleaning process R is performed, to be precise using a cleaning device 36 and a cleaning medium, namely for a time period TR which preferably ranges from 0.1 seconds to 5 seconds, yet is preferably less than 3 seconds, in particular less than 2 seconds.

Following this, the joining process F is then performed, where necessary with preceding arc cleaning process C.

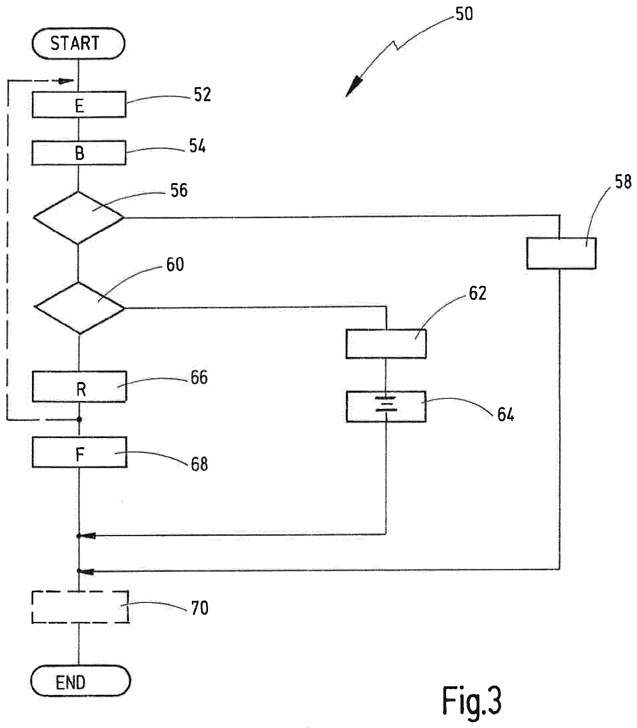

In Fig. 3 is represented an exemplary embodiment of a method according to the invention in the form of a block diagram 50.

The method 50 includes after a start, in a detection step 52, the detection of at least one characteristic variable of the workpiece 20.

In a subsequent evaluation step 54, the at least one characteristic variable is evaluated and classified either into a first or into a second variable class. Insofar as a classification is made into the first variable class, it is further evaluated whether the at least one characteristic variable falls into a first value range or into a second value range within the first variable class.

If the at least one characteristic variable of the workpiece 20 falls into the first value range of the first variable class, in an interrogation step 56 it is decided that a subsequent joining process F is performable with standard joining parameters, and this joining process is subsequently performed, as is shown at 58. The method is subsequently ended.

Insofar as the at least one characteristic variable does not fall into the first value range, in a subsequent interrogation step 60 it is enquired whether the at least one characteristic variable falls into the second value range within the first variable class. If this is the case, in a step 62 an adaptation is made of the joining parameters, so that the subsequent joining process 64 is performed with modified joining parameters. The adaptation of the joining parameters is here made preferably as a function of the at least one characteristic variable.

Insofar as it is established in the step 60 that the at least one characteristic variable falls into the second variable class, following this, in a step 66, a cleaning process is firstly performed.

After this, a joining process 68 takes place, to be precise preferably with standard joining parameters.

After the joining processes 58, 64, 68, the method is normally respectively ended. Where necessary, a subsequent, supplementary cleaning process 70 can also be performed, however, in which, for instance, traces of smoke residue due to the welding operation are removed. This supplementary cleaning process can be realized, for instance, using the same cleaning medium as the cleaning process 66.

In Fig. 3, it is further indicated that, after the performance of the cleaning process 66, a loopback is optionally performed, such that a detection of the at least one characteristic variable takes place at 52 and, after this, the following steps are likewise performed, depending on the evaluation of the at least one characteristic variable.

In a further embodiment, it is possible to first classify the workpiece (or classify several areas of the workpiece), then to perform a cleaning (if needed) and when the entire workpiece, or at least a portion of the workpiece is cleaned, perform one or several joining steps. Thus, several joining processes may be performed after evaluation of the characteristic variable and classification said characteristic variable into the first variable class.

Several cleaning process may also be performed after evaluation of the characteristic variable and classification said characteristic variable into the second variable class. Following the cleaning processes, several joining processes are performed.

According to the present invention, the evaluation and the assessment includes grouping values to a resulting variable which then allows choosing the correct set of joining parameters.

## Claims

1. Method (50) for joining a joining element (18) onto a workpiece (20), in particular for stud welding, **characterized by** the steps:
- provision of a joining element (18) and a workpiece (20) onto which the joining element (18) is to be joined,
- detection (52) of at least one characteristic variable of the workpiece (20) and/or of the joining element (18), wherein the detection step (52) comprises at least one of the following detection processes (E): a contact resistance measurement, a measurement of the electrical conductivity and a fluorescence measurement;
- evaluation (54) of the at least one characteristic variable and classification of the at least one characteristic variable into one of at least a first and a second variable class,
- performance of the joining process (58; 64) if the at least one characteristic variable is classified into the first variable class, and
- performance of a cleaning process (66) on the workpiece (20) and/or on the joining element (18) and performance of the joining process (68) after the cleaning process (66) if the at least one characteristic variable is classified into the second variable class,
**Characterized in that** the cleaning process (66) is performed independently of the joining process and the cleaning process (66) is performed using a cleaning medium (R).

2. Method according to Claim 1, wherein the cleaning medium (R) comprises a gas.

3. Method according to Claim 1 or 2, wherein the cleaning medium (R) comprises an ice jet.

4. Method according to one of Claims 1 to 3, wherein each individual joining process (58; 64; 68) is performed with standard joining parameters or with joining parameters which have been modified in relation to the standard joining parameters, and wherein the joining process (68) performed after the cleaning process (66) is performed using the standard joining parameters.

5. Method according to one of Claims 1 to 4, wherein each individual joining process (58; 64; 68) is performed with standard joining parameters or with joining parameters which have been modified in relation to the standard joining parameters, comprising the steps:
- provision of a joining element (18) and a workpiece (20) onto which the joining element (18) is to be joined,
- detection of at least one characteristic variable of the workpiece (20) and/or of the joining element (18),
- evaluation (54) of the at least one characteristic variable, and
- performance of the joining process (58) using standard joining parameters if the at least one characteristic variable lies within a first value range, or performance of the joining process (64) using modified joining parameters if the at least one characteristic variable lies within a second value range.

6. Method according to one of Claims 1 to 5, wherein the cleaning process (66) is performed for a time period (TR) ranging from 0.1 seconds to 5 seconds.

7. Method according to one of Claims 1 to 6, wherein after the cleaning process (66) the at least one characteristic variable is detected once again, and subsequently an evaluation of the at least one characteristic variable is performed once again, before the joining process (58; 64; 68) is performed.

8. Method according to one of Claims 1 to 7, wherein, after the joining process (58; 64; 68), a supplementary cleaning process (70) is performed.

9. Method according to one of Claims 1 to 8, wherein the joining process (58; 64; 68) is performed using standard joining parameters or using modified joining parameters, wherein the joining parameters include whether the joining process (58; 64; 68) comprises a preceding arc cleaning process (C).

10. Joining apparatus (10) for joining a joining element (18) onto a workpiece (20) for implementing the method according to one of Claims 1 to 9, comprising:
- a joining head (12), which has a holding device (24) for a joining element (18) and by means of which the joining element (18) is movable along a joining axis (22) in relation to a workpiece (20),
- a detection device (32) for detecting at least one characteristic variable of the workpiece (20) and/or of the joining element (18), the detection device (32) being adapted to perform at least one of the following detection processes (E): a contact resistance measurement, a measurement of the electrical conductivity and a fluorescence measurement;
- an evaluation device (40) for evaluating the at least one characteristic variable, and
- a cleaning device (36) for performing a cleaning process (R) on the workpiece (20) and/or on the joining element (18).

11. Joining apparatus according to Claim 10, wherein the cleaning device (36) is fixed to the joining head (12), and wherein the cleaning device (36) is preferably oriented at an angle (β) ranging between 10° and 45° in relation to the joining axis (22).

12. Joining apparatus according to Claim 10 or 11, wherein the detection device (32) is fixed to the joining head (12).

## Patentansprüche

1. Verfahren (50) zum Verbinden eines Verbindungselements (18) mit einem Werkstück (20), insbesondere zum Bolzenschweißen, **gekennzeichnet durch** die Schritte:
- Bereitstellung eines Verbindungselements (18) und eines Werkstücks (20), mit welchem das Verbindungselement (18) verbunden werden soll,
- Erkennung (52) zumindest einer charakteristischen Variablen des Werkstücks (20) und/oder des Verbindungselements (18), wobei der Erkennungsschritt (52) zumindest einen der folgenden Erkennungsprozesse (E) umfasst: eine Kontaktwiderstandsmessung, eine Messung der elektrischen Leitfähigkeit und eine Fluoreszenzmessung;
- Auswertung (54) der zumindest einen charakteristischen Variablen und Klassifizierung der zumindest einen charakteristischen Variablen in eine von zumindest einer ersten und einer zweiten Variablenklasse,
- Durchführung des Verbindungsprozesses (58; 64), wenn die zumindest eine charakteristische Variable in die erste Variablenklasse klassifiziert wird, und
- Durchführung eines Reinigungsprozesses (66) an dem Werkstück (20) und/oder an dem Verbindungselement (18) und Durchführung des Verbindungsprozesses (68) nach dem Reinigungsprozess (66), wenn die zumindest eine charakteristische Variable in die zweite Variablenklasse klassifiziert wird,
**dadurch gekennzeichnet, dass** der Reinigungsprozess (66) unabhängig von dem Verbindungsprozess durchgeführt wird und der Reinigungsprozess (66) unter Verwendung eines Reinigungsmediums (R) durchgeführt wird.

2. Verfahren nach Anspruch 1, wobei das Reinigungsmedium (R) ein Gas umfasst.

3. Verfahren nach Anspruch 1 oder 2, wobei das Reinigungsmedium (R) einen Eisstrahl umfasst.

4. Verfahren nach einem der Ansprüche 1 bis 3, wobei jeder einzelne Verbindungsprozess (58; 64; 68) mit Standardverbindungsparametern oder mit in Bezug auf die Standardverbindungsparameter modifizierten Verbindungsparametern durchgeführt wird, und wobei der nach dem Reinigungsprozess (66) durchgeführte Verbindungsprozess (68) unter Verwendung der Standardverbindungsparameter durchgeführt wird.

5. Verfahren nach einem der Ansprüche 1 bis 4, wobei jeder einzelne Verbindungsprozess (58; 64; 68) mit Standardverbindungsparametern oder mit in Bezug auf die Standardverbindungsparameter modifizierten Verbindungsparametern durchgeführt wird, umfassend die Schritte:
- Bereitstellung eines Verbindungselements (18) und eines Werkstücks (20), mit welchem das Verbindungselement (18) verbunden werden soll,
- Erkennung zumindest einer charakteristischen Variablen des Werkstücks (20) und/oder des Verbindungselements (18),
- Auswertung (54) der zumindest einen charakteristischen Variablen, und
- Durchführung des Verbindungsprozesses (58) mit Standardverbindungsparametern, wenn die zumindest eine charakteristische Variable innerhalb eines ersten Wertebereichs liegt, oder Durchführung des Verbindungsprozesses (64) unter Verwendung modifizierter Verbindungsparameter, wenn die zumindest eine charakteristische Variable innerhalb eines zweiten Wertebereichs liegt.

6. Verfahren nach einem der Ansprüche 1 bis 5, wobei der Reinigungsprozess (66) für eine Zeitspanne (TR) im Bereich von 0,1 Sekunden bis 5 Sekunden durchgeführt wird.

7. Verfahren nach einem der Ansprüche 1 bis 6, wobei nach dem Reinigungsprozess (66) die zumindest eine charakteristische Variable erneut erkannt wird und anschließend erneut eine Auswertung der zumindest einen charakteristischen Variablen durchgeführt wird, bevor der Verbindungsprozess (58; 64; 68) durchgeführt wird.

8. Verfahren nach einem der Ansprüche 1 bis 7, wobei nach dem Verbindungsprozess (58; 64; 68) ein ergänzender Reinigungsprozess (70) durchgeführt wird.

9. Verfahren nach einem der Ansprüche 1 bis 8, wobei der Verbindungsprozess (58; 64; 68) unter Verwendung von Standardverbindungsparametern oder unter Verwendung von modifizierten Verbindungsparametern durchgeführt wird, wobei die Verbindungsparameter beinhalten, ob der Verbindungsprozess (58; 64; 68) einen vorhergehenden Lichtbogenreinigungsprozess (C) umfasst.

10. Verbindungseinrichtung (10) zum Verbinden eines Verbindungselements (18) mit einem Werkstück (20) zum Implementieren des Verfahrens nach einem der Ansprüche 1 bis 9, umfassend:
- einen Verbindungskopf (12), welcher eine Haltevorrichtung (24) für ein Verbindungselement (18) aufweist und mittels dessen das Verbindungselement (18) entlang einer Verbindungsachse (22) in Bezug auf ein Werkstück (20) beweglich ist,
- eine Erkennungsvorrichtung (32) zum Erkennen zumindest einer charakteristischen Variablen des Werkstücks (20) und/oder des Verbindungselements (18), wobei die Erkennungsvorrichtung (32) dazu angepasst ist, zumindest einen der folgenden Erkennungsprozesse (E) durchzuführen: eine Kontaktwiderstandsmessung, eine Messung der elektrischen Leitfähigkeit und eine Fluoreszenzmessung;
- eine Auswertungsvorrichtung (40) zum Auswerten der zumindest einen charakteristischen Variablen, und
- eine Reinigungsvorrichtung (36) zum Durchführen eines Reinigungsprozesses (R) an dem Werkstück (20) und/oder an dem Verbindungselement (18).

11. Verbindungseinrichtung nach Anspruch 10, wobei die Reinigungsvorrichtung (36) an dem Verbindungskopf (12) befestigt ist, und wobei die Reinigungsvorrichtung (36) bevorzugt in einem Winkel (ß) im Bereich zwischen 10° und 45° in Bezug auf die Verbindungsachse (22) ausgerichtet ist.

12. Verbindungseinrichtung nach Anspruch 10 oder 11, wobei die Erkennungsvorrichtung (32) an dem Verbindungskopf (12) befestigt ist.

## Revendications

1. Procédé (50) d'assemblage d'un élément d'assemblage (18) sur une pièce à travailler (20), en particulier pour le soudage de goujons, **caractérisé par** les étapes :
- la fourniture d'un élément d'assemblage (18) et d'une pièce à travailler (20) sur laquelle l'élément d'assemblage (18) doit être assemblé,
- la détection (52) d'au moins une variable caractéristique de la pièce à travailler (20) et/ou de l'élément d'assemblage (18), dans lequel l'étape de détection (52) comprend au moins l'un des processus de détection suivants (E) : une mesure de résistance de contact, une mesure de la conductivité électrique et une mesure de fluorescence ;
- l'évaluation (54) de la au moins une variable caractéristique et la classification de la au moins une variable caractéristique dans l'une d'au moins une première classe de variables et une seconde classe de variables,
- l'exécution du processus d'assemblage (58 ; 64) si la au moins une variable caractéristique est classée dans la première classe de variables, et
- la réalisation d'un processus de nettoyage (66) sur la pièce à travailler (20) et/ou sur l'élément d'assemblage (18) et la réalisation du processus d'assemblage (68) après le processus de nettoyage (66) si la au moins une variable caractéristique est classée dans la seconde classe de variables,
**caractérisé en ce que** le processus de nettoyage (66) est réalisé indépendamment du processus d'assemblage et le processus de nettoyage (66) est réalisé à l'aide d'un milieu de nettoyage (R).

2. Procédé selon la revendication 1, dans lequel le milieu de nettoyage (R) comprend un gaz.

3. Procédé selon la revendication 1 ou 2, dans lequel le milieu de nettoyage (R) comprend un jet de glace.

4. Procédé selon l'une des revendications 1 à 3, dans lequel chaque processus d'assemblage individuel (58 ; 64 ; 68) est réalisé avec des paramètres d'assemblage standards ou avec des paramètres d'assemblage modifiés par rapport aux paramètres d'assemblage standards, et dans lequel le processus d'assemblage (68) réalisé après le processus de nettoyage (66) est réalisé à l'aide des paramètres d'assemblage standards.

5. Procédé selon l'une des revendications 1 à 4, dans lequel chaque processus d'assemblage individuel (58 ; 64 ; 68) est réalisé avec des paramètres d'assemblage standards ou avec des paramètres d'assemblage modifiés par rapport aux paramètres d'assemblage standards, comprenant les étapes :
- la fourniture d'un élément d'assemblage (18) et d'une pièce à travailler (20) sur laquelle l'élément d'assemblage (18) doit être assemblé,
- la détection d'au moins une variable caractéristique de la pièce à travailler (20) et/ou de l'élément d'assemblage (18),
- l'évaluation (54) de la au moins une variable caractéristique, et
- la réalisation du processus d'assemblage (58) à l'aide de paramètres d'assemblage standards si la au moins une variable caractéristique se situe dans une première plage de valeurs, ou la réalisation du processus d'assemblage (64) à l'aide de paramètres d'assemblage modifiés si la au moins une variable caractéristique se situe dans une seconde plage de valeurs.

6. Procédé selon l'une des revendications 1 à 5, dans lequel le processus de nettoyage (66) est réalisé pendant une période de temps (TR) variant entre 0,1 seconde et 5 secondes.

7. Procédé selon l'une des revendications 1 à 6, dans lequel, après le processus de nettoyage (66), la au moins une variable caractéristique est à nouveau détectée et, par la suite, une évaluation de la au moins une variable caractéristique est à nouveau réalisée, avant que le processus d'assemblage (58 ; 64 ; 68) ne soit réalisé.

8. Procédé selon l'une des revendications 1 à 7, dans lequel, après le processus d'assemblage (58 ; 64 ; 68), un processus de nettoyage supplémentaire (70) est réalisé.

9. Procédé selon l'une des revendications 1 à 8, dans lequel le processus d'assemblage (58 ; 64 ; 68) est réalisé à l'aide de paramètres d'assemblage standards ou de paramètres d'assemblage modifiés, dans lequel les paramètres d'assemblage incluent si le processus d'assemblage (58 ; 64 ; 68) comprend un précédent processus de nettoyage à l'arc électrique (C).

10. Appareil d'assemblage (10) pour assembler un élément d'assemblage (18) sur une pièce à travailler (20) pour mettre en œuvre le procédé selon l'une des revendications 1 à 9, comprenant :
- une tête d'assemblage (12), qui comporte un dispositif de maintien (24) pour un élément d'assemblage (18) et au moyen de laquelle l'élément d'assemblage (18) peut se déplacer le long d'un axe d'assemblage (22) par rapport à une pièce à travailler (20),
- un dispositif de détection (32) pour détecter au moins une variable caractéristique de la pièce à travailler (20) et/ou de l'élément d'assemblage (18), le dispositif de détection (32) étant adapté pour réaliser au moins l'un des processus de détection (E) suivants : une mesure de résistance de contact, une mesure de la conductivité électrique et une mesure de fluorescence ;
- un dispositif d'évaluation (40) pour évaluer la au moins une variable caractéristique, et
- un dispositif de nettoyage (36) pour réaliser un processus de nettoyage (R) sur la pièce à travailler (20) et/ou sur l'élément d'assemblage (18).

11. Appareil d'assemblage selon la revendication 10, dans lequel le dispositif de nettoyage (36) est fixé à la tête d'assemblage (12) et dans lequel le dispositif de nettoyage (36) est, de préférence, orienté selon un angle (β) variant entre 10° et 45° par rapport à l'axe d'assemblage (22).

12. Appareil d'assemblage selon la revendication 10 ou 11, dans lequel le dispositif de détection (32) est fixé à la tête d'assemblage (12).
